# DEMANDE DE BREVET EUROPEEN

(11) **EP 4 617 636 A1**
(43) Date de publication de la demande: **17.09.2025**
(21) Numéro de dépôt: 25161876.5
(22) Date de dépôt: 05.03.2025
(51) Int. Cl.: G01M 7/06, G01M 5/00

(54) **PROCEDE D'IDENTIFICATION DU COMPORTEMENT DYNAMIQUE D'UN OBJET NON-RIGIDE**

(30) Priorité: 14.03.2024 FR 2402527
(71) Demandeur: Philoptere, 78860 Saint Nom La Breteche (FR)
(72) Inventeur: PERRIER, Philippe, 78860 Saint-Nom-la-Bretèche (FR)
(74) Mandataire: Plasseraud IP

(57) **Abrégé**

Un procédé d'identification du comportement dynamique d'un objet non-rigide (10), l'objet étant fixé solidairement à une plateforme (12) pouvant être mise en mouvement par un dispositif d'entrainement (14) est proposé. Le procédé comprend l'actionnement du dispositif d'entrainement (14) de manière à imprimer à l'objet un mouvement périodique prédéfini à une fréquence, dite « fréquence de cycle ». Le mouvement périodique est une combinaison d'au moins deux mouvements élémentaires périodiques géométriquement indépendants. Le procédé comprend l'enregistrement pendant l'actionnement de la variation d'au moins une grandeur représentative d'un comportement dynamique, dite « grandeur dynamique », et le calcul pour chacune des fréquences de cycle des composantes dites « composantes élémentaires », d'une transformée de Fourier de la variation de ladite au moins une grandeur dynamique pour chaque fréquence élémentaire. Un comportement dynamique de l'objet est déterminé en fonction de la variation des composantes élémentaires.

## Description

### Domaine technique

La présente se réfère aux procédés et dispositifs de détermination d'au moins une caractéristique du comportement dynamique d'un objet susceptible d'avoir au moins un mode de résonance, comme par exemple un objet ayant au moins une partie souple, ou élastique ou liquide.

### Technique antérieure

Lorsqu'un objet rigide est soumis à des accélérations linéaires ou angulaires, il oppose des efforts de réaction qui sont totalement représentés par les caractéristiques inertielles : masse, coordonnées du centre de gravité, moments et produits d'inertie. Mais si un objet n'est pas totalement rigide et comporte, par exemple, des parties souples ou contient du liquide, il présente un comportement particulier avec des modes de résonance qui correspondent au déplacement maximal des parties non rigides par rapport au reste de l'objet.

La résonance est un phénomène physique qui se produit lorsque la fréquence d'un mouvement périodique appliqué à un système est égale à la fréquence naturelle de résonance du système. La fréquence naturelle de résonance d'un système est la fréquence à laquelle le système vibre le plus facilement et accumule le plus d'énergie lorsqu'il est excité par le mouvement périodique. Un mode de résonance est caractérisé par une fréquence dite fréquence de résonance, les paramètres du mouvement qui engendre la résonance et l'amplitude de la réponse de l'objet. L'amplitude de la réponse de l'objet peut être caractérisée par différentes grandeurs physiques associées au mode de résonance comme, par exemple, les efforts qu'il faut appliquer à l'objet ou à une partie de l'objet, des contraintes dans certaines parties, des pressions sur les parois d'un réservoir, le déplacement relatif de certaines parties. Chaque système physique possède une ou plusieurs fréquences naturelles de résonance associée à ses propriétés physiques et géométriques. On considère qu'un objet est rigide s'il ne présente aucune fréquence de résonance dans les conditions de son utilisation opérationnelle. La résonance peut avoir des effets indésirables, elle peut par exemple provoquer des dommages ou des défaillances structurelles, comme dans le cas de liquide contenu dans un réservoir.

De ce fait, les efforts de réaction d'un objet présentant une partie non rigide peuvent être très différents de ceux d'un objet rigide et ne peuvent pas être représentés par les seules caractéristiques inertielles citées plus haut. Si les parties non rigides ont une masse significative par rapport à celle de l'objet complet, leur comportement peut fortement modifier celui de l'objet complet ou du véhicule auquel il appartient. Les modes de résonance peuvent endommager certaines parties au-delà d'une certaine amplitude de la sollicitation.

Dans le cas particulier d'un réservoir partiellement rempli soumis à des mouvements, le liquide est lui-même animé de mouvements complexes, combinaisons des vagues de surface libre générées par les mouvements du réservoir. Ces vagues induisent des efforts en réaction sur les parois du réservoir. Ils peuvent avoir un effet sur le comportement du mobile auquel est fixé le réservoir, par exemple tout type de véhicule terrestre, aérien ou marin. Ce problème est aussi critique pour les réservoirs de propergols liquides des lanceurs spatiaux. On peut citer, par exemple, la perte d'un lanceur de satellite Falcon 1 due au ballotement incontrôlé du propergol dans un réservoir. Ils peuvent aussi se focaliser sur un point des parois en engendrant des pressions locales très importantes susceptible d'endommager ces parois. Les efforts dépendent fortement du taux de remplissage du réservoir, du type de mouvement qui lui sont appliqués et de leur fréquence. De tels mouvements du liquide sont en général désignés sous le terme anglais de « sloshing ». L'identification des caractéristiques du sloshing en fonction des mouvements du réservoir est donc importante. Les principales caractéristiques à identifier sont les modes de résonance qui induisent les efforts les plus importants sur le réservoir et sont susceptibles de favoriser des focalisations sur certains points des parois.

Cette identification se fait généralement en plaçant l'objet ou une maquette à échelle réduite sur une plateforme qui lui applique des mouvements génériques identifiés par d'autres moyens comme représentatifs des mouvements auxquels il peut être soumis dans son utilisation opérationnelle. Des capteurs d'efforts placés sur la plateforme, sur l'objet à mesurer ou sur certaines parties de celui-ci permettent d'identifier la réponse aux sollicitations et de détecter les modes de résonance. Dans le cas d'un réservoir, il peut y avoir des capteurs de pression locale permettant de quantifier la réponse du liquide aux sollicitations. Les mouvements génériques peuvent être, par exemple des oscillations en roulis, tangage et lacet appliquées successivement avec différentes amplitudes et différentes fréquences. Des descriptions de ces méthodes appliquées à des réservoirs de liquide peuvent être trouvées dans KR101721498B1, CN105806578A, KR101259146B1, WO2020225353A1.

Le projet « Sloshel » est un projet industriel commun à plusieurs entreprises et qui a pour but de collecter des données à partir d'expériences de ballottement à grande échelle. la méthode de calcul utilisée dans le projet « Sloshel » a pour principal inconvénient de nécessiter un grand nombre d'essais pour explorer les différentes combinaisons de mouvements et fréquences. Pour un réservoir, il faut également chercher les modes de résonance pour différents taux de remplissage. L'identification des mouvements à appliquer est une phase préalable qui peut être couteuse en temps et en moyens.

On connait par ailleurs un dispositif de balance à inertie tel que divulgué dans FR1858787 permettant d'appliquer à un objet un mouvement périodique prédéfini composé de la superposition de mouvements élémentaires à des fréquences harmoniques de la fréquence du cycle complet. Ce dispositif a pour objectif la mesure des caractéristiques inertielles d'un objet rigide mais le procédé décrit dans FR1858787 ne permet pas de déterminer les caractéristiques d'un objet présentant une partie souple ou liquide.

### Résumé

La présente divulgation vient améliorer la situation.

Il est proposé un procédé d'identification du comportement dynamique d'un objet non-rigide, l'objet étant fixé solidairement à une plateforme pouvant être mise en mouvement par un dispositif d'entrainement, le procédé comprenant : actionner le dispositif d'entrainement de manière à imprimer à l'objet un mouvement périodique prédéfini à une fréquence, dite « fréquence de cycle », le mouvement périodique étant une combinaison d'au moins deux mouvements élémentaires périodiques géométriquement indépendants, lesdits au moins deux mouvements élémentaires ayant chacun une fréquence, dite « fréquence élémentaire », multiple entier de la fréquence de cycle, au plus deux desdits au moins deux mouvements élémentaires étant de même fréquence élémentaire, si le mouvement périodique comprend deux mouvements élémentaires de même fréquence élémentaire alors ils sont de phase différente, préférentiellement en quadrature de phase, l'actionnement étant fait pendant au moins une période du mouvement périodique ; enregistrer pendant l'actionnement la variation d'au moins une grandeur représentative d'un comportement dynamique, dite « grandeur dynamique », collectée par au moins un capteur disposé sur la plateforme et/ou l'objet ; répéter l'actionnement du dispositif d'entrainement et l'enregistrement de la variation de ladite au moins une grandeur dynamique à diverses fréquences de cycle à chaque fois pendant au moins une période du mouvement périodique, les diverses fréquences de cycle se trouvant dans une plage de fréquences prédéfinies ; calculer, par une unité de calcul, pour chacune des fréquences de cycle de la plage de fréquences prédéfinies les composantes d'une transformée de Fourier de la variation de ladite au moins une grandeur dynamique pour chaque fréquence élémentaire, les composantes, dites « composantes élémentaires », incluant une composante élémentaire intensité et une composante élémentaire phase ; et déterminer en fonction de la variation des composantes élémentaires un comportement dynamique de l'objet.

**Les** caractéristiques exposées dans les paragraphes suivants peuvent, optionnellement, être mises en œuvre, indépendamment les unes des autres ou en combinaison les unes avec les autres :
- lesdits au moins deux mouvements élémentaires ont deux fréquences élémentaires différentes, préférentiellement de rapports 2 et 3 ou 3 et 4 par rapport à la fréquence de cycle, ou lesdits au moins deux mouvements élémentaires ont trois fréquences élémentaires différentes, préférentiellement de rapports 4, 5 et 6 par rapport à la fréquence de cycle.
- déterminer le comportement dynamique de l'objet comprend constater que la variation des composantes élémentaires n'est pas une fonction linéaire du carré de la fréquence du cycle.
- ladite au moins une grandeur représentative d'un comportement dynamique est représentative d'une condition de résonance de l'objet, et cette grandeur est dite « grandeur de résonance », et déterminer le comportement dynamique de l'objet comprend identifier au moins une fréquence de résonance pour chacun desdits au moins deux mouvements élémentaires à partir des variations suivant les fréquences élémentaires des composantes élémentaires de chacun desdits au moins deux mouvements élémentaires.
- identifier au moins une fréquence de résonance pour chacun desdits au moins deux mouvements élémentaires, inclut identifier un extremum de la composante élémentaire intensité pour chacun desdits au moins deux mouvements élémentaires.
- le procédé comprend de plus la détermination d'une amplitude de ladite au moins une grandeur de résonance pour ladite au moins une fréquence de résonance, cette détermination se faisant à partir des variations de ladite au moins une grandeur de résonance suivant les fréquences élémentaires des composantes élémentaires pour chacun desdits au moins deux mouvements élémentaire.
- l'amplitude de ladite au moins une grandeur de résonance est l'amplitude de l'extremum de la composante élémentaire intensité de ladite au moins une grandeur de résonance à ladite au moins une fréquence de résonance identifiée.
- le procédé comprend de plus l'identification pour chacune desdites fréquences de résonance identifiées d'un mode de résonance de ladite au moins une grandeur de résonance, le mode de résonance étant de plus caractérisé par une amplitude de la composante élémentaire intensité à ladite fréquence de résonance considérée, et une direction associée au mouvement élémentaire pour ladite fréquence de résonance considérée.
- si une desdites fréquences de résonance identifiées pour chacun desdits au moins deux mouvements élémentaires est identique pour plusieurs mouvements élémentaires, alors le mode de résonance est caractérisé par la combinaison de ces mouvements élémentaires.
- l'objet est un réservoir contenant un liquide, et la détermination du comportement dynamique comprenant une étape de mesure des grandeurs dynamiques avec le réservoir vide, et en déduire, par soustraction des composantes élémentaires, les seuls effets du liquide.
- ledit au moins un capteur comprend une pluralité de capteurs d'efforts et/ou accéléromètres disposés sur des parties de l'objet susceptibles de résonance et/ou capteurs de pression disposés sur des parties rigides de l'objet et/ou jauges de contraintes disposées sur des parties souples de l'objet.
- ladite au moins une grandeur de résonance collectée par ledit au moins un capteur est enregistrée à une cadence supérieure à au moins 4 fois une plus haute des fréquences élémentaires et de préférence supérieure à 10 fois.
- dans lequel la répétition de l'actionnement se fait par fréquences de cycle croissantes dans la plage de fréquences prédéfinies.

### Avantages

Un avantage de ce procédé est qu'il n'est pas nécessaire d'appliquer successivement différents mouvements élémentaires à différentes fréquences pour identifier les modes de résonance. Le mouvement périodique appliqué à l'objet permet de solliciter tous les mouvements élémentaires en une seule rampe en fréquence. La conséquence est un gain de temps pour la prise de mesures.

Un autre avantage du procédé est qu'il permet d'utiliser un moyen de mise en mouvement dont le mouvement est totalement prédéfini, y compris éventuellement par des liaisons mécaniques, comme par exemple celui décrit dans FR1752729. Un tel moyen permettra reproductibilité des mouvements et simplicité d'utilisation.

Le procédé présenté sollicite, par la combinaison des mouvements élémentaires, tous les axes de mouvement du solide. De ce fait, il n'est pas nécessaire d'identifier préalablement les mouvements possibles du solide dans son contexte opérationnel.

En permettant d'identifier systématiquement tous les modes de résonance et leur fréquence, le procédé permet de trouver des combinaisons de modes de fréquences différentes mais dont la combinaison temporelle des extrémums est potentiellement plus dommageable.

### Brève description des dessins

D'autres caractéristiques, détails et avantages apparaîtront à la lecture de la description détaillée ci-après, et à l'analyse des dessins annexés, sur lesquels :
Fig. 1

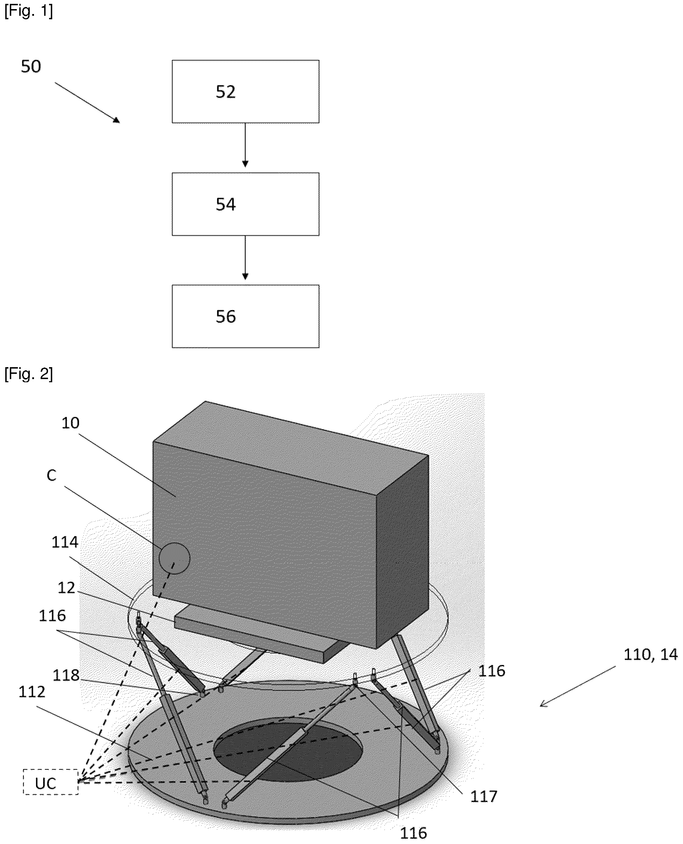

   [Fig. 1] montre un ordinogramme d'un procédé d'identification du comportement dynamique d'un objet non-rigide selon un mode de réalisation.
Fig. 2
   [Fig. 2] montre un dispositif d'entrainement selon un mode de réalisation, le dispositif étant utilisé pour la mise en œuvre du procédé de la figure 1.
Fig. 3

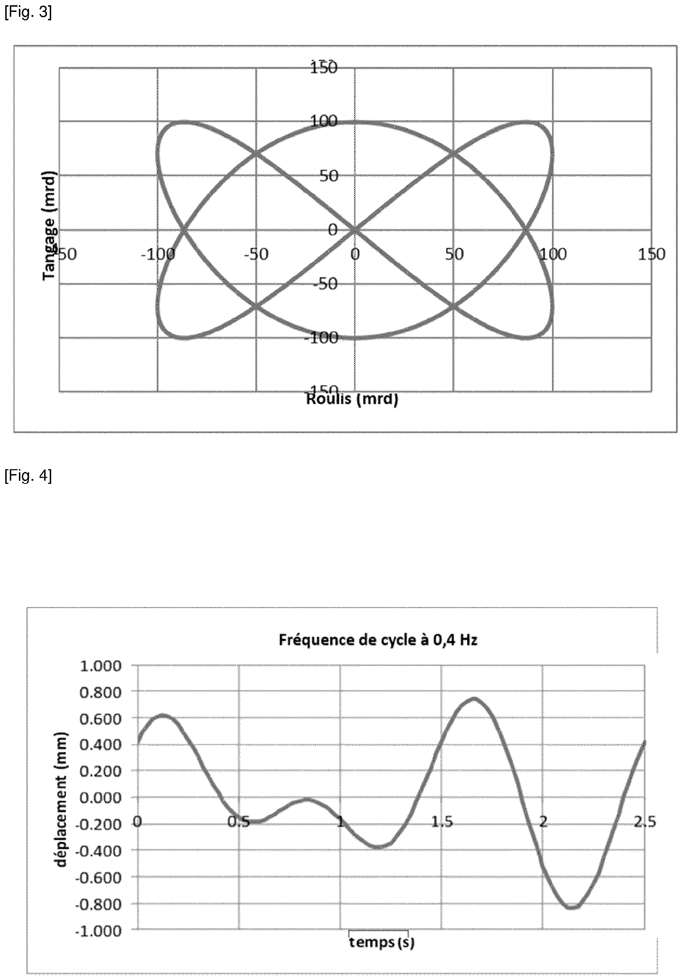

   [Fig. 3] montre un exemple de courbe de déplacement d'un objet mis en mouvement selon le procédé de la figure1.
**Fig. 4**
   [Fig. 4] montre un exemple de mesures captées par un capteur relatif au déplacement d'une partie non rigide d'un objet mis en mouvement selon le procédé de la figure1.
**Fig. 5**

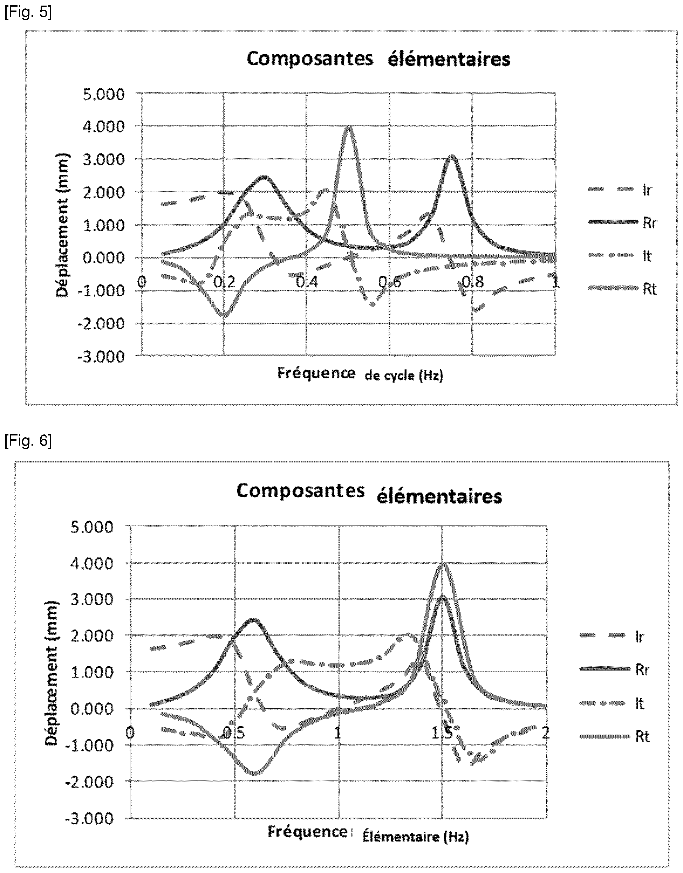

   [Fig. 5] montre un exemple de variations de composantes élémentaires en fonction de la fréquence de cycle du mouvement imposé à l'objet selon le procédé de la figure1.
**Fig. 6**
   [Fig. 6] montre un exemple de variations de composantes élémentaires en fonction de fréquences élémentaires du mouvement imposé à l'objet selon le procédé de la figure1.

### Description des modes de réalisation

Il est maintenant fait référence à la figure 1, qui illustre un **procédé 50.** Le procédé 50 décrit dans la présente concerne l'identification expérimentale du comportement dynamique d'un **objet 10** (montré à la figure 2), notamment ses modes de résonance, dans une plage de fréquence prédéfinie, sans connaissance préalable des mouvements qui peuvent les exciter.

Le procédé 50 est appliqué à un objet non-rigide, c'est-à-dire susceptible d'exhiber un comportement résonnant. Par exemple l'objet 10 est en partie ou en totalité souple, élastique ou présente une articulation. L'objet 10 peut selon un mode de réalisation être un réservoir rigide contenant un liquide.

Pour identifier le comportement dynamique de l'objet 10, le procédé 50 utilise une **plateforme 12** animée d'un mouvement périodique prédéfini grâce à un **dispositif d'entrainement 14.** Selon un mode de réalisation, le dispositif d'entrainement 14 est une tourelle hexapode. Un exemple de tourelle hexapode (aussi appelée plateforme de Stewart) est notamment décrit dans FR1752729.

Selon un exemple, et tel qu'illustré à la figure 2, un exemple de tourelle **hexapode 110** inclut une **base 112, un plateau 114** pour recevoir l'objet 10, et six **supports 116** liants la base 112 au plateau 114. Les supports 116 sont, dans ce mode de réalisation, des bielles. Les bielles 116 ont leurs **extrémités supérieures 117** connectées au plateau 114 et leurs **extrémités inférieures 118** connectées à la base 112. Les extrémités inférieures 118 d'au moins trois bielles 116, dites supports commandé(e)s, sont mises en mouvement afin de mettre en mouvement le plateau 114. Les supports sont commandés par une **unité centrale UC.** Dans un autre mode de réalisation, les supports peuvent être connectés de façon mécanique entre eux par des roues d'engrenage.

Le dispositif d'entrainement 14 permet notamment d'imprimer à l'objet 10 un mouvement périodique prédéfini à une fréquence, dite « **fréquence de cycle** ». Le mouvement périodique permet en un cycle de faire bouger l'objet 10 dans plusieurs directions. Ainsi, le mouvement périodique est une combinaison de deux ou plus mouvements élémentaires. Les mouvements élémentaires sont périodiques et géométriquement indépendants (autrement dit si et seulement si les vecteurs décrivant les mouvements sont indépendants, on parle aussi de « algébriquement indépendants », c'est-à-dire qu'aucun n'est une combinaison linéaire des autres). Chaque mouvement élémentaire a une fréquence, dite « **fréquence élémentaire** », qui est un multiple entier de la fréquence de cycle (i.e. harmonique). Le mouvement périodique peut comprendre jusqu'à 6 mouvements élémentaires représentant les 3 mouvements de rotation et les 3 mouvements de translation de tout déplacement d'un objet.

Chaque mouvement élémentaire est caractérisé par un vecteur d'amplitude qui comprend 6 composantes (Tx, Ty, Tz, Rx, Ry, Rz) où Tx, Ty, Tz sont des translations dans le repère de coordonnées de référence, et Rx, Ry, Rz sont des rotations de roulis, tangage et lacet par rapport à un axe passant par l'origine du repère de référence, la fréquence élémentaire, et un éventuel déphasage par rapport à une origine du cycle (choisi arbitrairement). Un exemple de mouvement périodique est illustré à la figure 3. Il est composé de deux mouvements élémentaires de rotation : tangage et roulis.

Au plus deux des mouvements élémentaires du mouvement périodique sont de même fréquence élémentaire. Si deux mouvements élémentaires ont la même fréquence, leurs phases sont alors choisies pour être différentes entre elles, de préférence en quadrature (déphasage de 90°). C'est le cas, par exemple, si un des mouvements est en sinus et l'autre en cosinus. Dans le cas où il n'y a que deux fréquences différentes des mouvements élémentaires, on peut les choisir de préférence dans les rapports 2 et 3 ou 3 et 4 par rapport à la fréquence de cycle. Dans le cas où il y a 3 fréquences différentes des mouvements élémentaires, on peut les choisir de préférence dans les rapports 4, 5 et 6 par rapport à la fréquence de cycle.

Pour un mouvement périodique à la fréquence de cycle f, on peut donner un exemple d'une telle combinaison de 6 mouvements élémentaires comme suit: un mouvement de roulis défini par Rx . sin (4.f.2.π.t), un mouvement de tangage défini par Ry . cos (4.f.2.π.t), un mouvement de lacet défini par Rz . sin (6.f.2.π.t), un mouvement de translation suivant X défini par Tx . sin (5.f.2.π.t), un mouvement de translation suivant Y défini par Ty . cos (5.f.2.π.t), et un mouvement de translation suivant Z défini par Tz . cos (6.f.2.π.t).

Le mouvement périodique est appliqué à l'objet 10 à plusieurs fréquences de cycle pour couvrir une plage de fréquence d'intérêt. Cette plage de fréquences peut être définie en fonction de la connaissance que l'on a de la zone de fréquence dans laquelle on est susceptible de trouver la résonance ou du domaine de fonctionnement opérationnel de l'objet 10.

A chaque fréquence de cycle, le mouvement périodique est effectué au complet, et peut être répété autant de fois que nécessaire pour faire ressortir les possibles modes de résonance à cette fréquence. Les différentes fréquences de cycle utilisées ainsi que le pas en fréquence entre deux fréquences de cycle est préférentiellement adapté au comportement dynamique que l'on souhaite mettre en évidence. Ainsi, selon un mode de réalisation, le pas en fréquence entre deux fréquences de cycle est à une largeur fréquentielle des modes de résonance que l'on pense trouver. On peut initialement placer une dizaine de fréquences entre la fréquence haute et la fréquence basse de la plage de fréquences prédéfinie. On peut ensuite resserrer le pas en fréquence autour des fréquences de résonance identifiées. Lorsque l'on effectue les mouvements périodiques à différentes fréquences de cycle, ceux-ci peuvent être effectués de façon ordonnée, par exemple par fréquence de cycle croissante à partir d'une borne inférieure de la plage de fréquences prédéfinie.

L'actionnement du dispositif d'entrainement 14 permettant d'imprimer à l'objet 10 le mouvement périodique se déroule en même temps qu'un enregistrement de données collectées d'un ou plusieurs capteurs C. Les capteurs C permettent de collecter la variation d'au moins une grandeur représentative du comportement dynamique de l'objet, dite *« **grandeur dynamique** »,* comme par exemple d'une condition de résonance, dite *« **grandeur de résonance** ».* La grandeur de résonance est une mesure qui permet de mesurer, directement ou indirectement, un déplacement relatif à l'intérieur de l'objet (e.g. effort, déplacement, accélération, pression...).

Le ou les capteurs C sont disposés sur la plateforme 12 et/ou l'objet 10. Le type de capteurs C et les grandeurs qu'ils mesurent sont choisis par l'utilisateur en fonction des caractéristiques des parties susceptibles du comportement dynamique (e.g. résonance) (c'est-à-dire les parties non rigides) qu'il veut identifier. Le ou les capteurs C peuvent être, par exemple des capteurs d'efforts permettant de mesurer à chaque instant les efforts subis par l'objet 10 ou une partie de l'objet 10, des accéléromètres sur des parties de l'objet 10 susceptibles de résonance, des capteurs de pression ou jauges d'efforts en certains points d'intérêt (par exemple des parois d'un réservoir, si l'objet est un réservoir rempli au moins partiellement de liquide). Les mesures des capteurs C sont enregistrées à divers moments pendant chacun des mouvements périodiques. Selon un mode de réalisation, la collecte des données des capteurs C est effectuée à une fréquence supérieure à au moins 4 fois la plus haute des fréquences élémentaires (parmi les fréquences élémentaires des mouvements élémentaires composant le mouvement périodique) et de préférence supérieure à 10 fois.

Lorsque le dispositif d'entrainement 14 est une tourelle hexapode, il peut être avantageux d'équiper au moins 3 des 6, voire chaque, support(s) 116 de capteur d'efforts. En effet, il existe alors une relation biunivoque entre les efforts axiaux le long des six supports 116 et le torseur des efforts appliqués au plateau 114 sur lequel est fixé l'objet 10.

Le procédé 50 commence donc à **l'étape 52** par l'actionnement du dispositif d'entrainement 14 de manière à imprimer à l'objet 10 un mouvement périodique prédéfini à une fréquence de cycle dans une plage de fréquences prédéfinies, tel que décrit plus haut. Pendant l'actionnement, les variations d'une ou plusieurs grandeurs représentatives d'un comportement dynamique de l'objet 10 (par exemple représentatives de conditions de résonance) sont collectées grâce aux capteurs. L'actionnement du dispositif d'entrainement 14 et l'enregistrement du comportement dynamique de l'objet sont réalisés à diverses fréquences de cycle à chaque fois pendant au moins une période du mouvement périodique. Les diverses fréquences de cycle se trouvent dans une plage de fréquences prédéfinies.

La figure 4 montre un exemple de variation temporelle d'une grandeur dynamique de l'objet (déplacement), en l'occurrence une grandeur susceptible de faire apparaitre les fréquences de résonance de l'objet, pour un mouvement périodique à une fréquence de cycle de 0.4 Hz.

Ainsi à l'étape 52, cette variation temporelle est obtenue pour diverses fréquences de cycle.

À **l'étape 54,** une unité de calcul (qui peut être l'unité centrale UC), qui a accès aux données des capteurs C, calcule la transformée de Fourier de chaque capteur sur les fréquences élémentaires de chaque cycle. Chaque transformée de Fourrier correspondant à une fréquence élémentaire est appelée "composante élémentaire". L'unité de calcul détermine un comportement dynamique de l'objet grâce à l'analyse des variations des composantes élémentaires en fonction des fréquences élémentaires.

L'unité de calcul calcule pour chacune des fréquences de cycle à laquelle l'objet 10 a subi le mouvement périodique, les composantes d'une transformée de Fourier de la variation de la (ou les) grandeur de résonance pour chaque fréquence élémentaire. Les composantes obtenues sont dites *« **composantes élémentaires** ».* Elles incluent une composante élémentaire intensité et une composante élémentaire phase.

Selon un mode de réalisation, la détermination du comportement dynamique de l'objet comprend déterminer que l'objet est au moins en partie non-rigide. Mathématiquement ceci peut se traduire par une comparaison entre la variation des composantes élémentaires des efforts appliqués à l'objet et un carré de la fréquence du cycle (ou de chaque fréquence élémentaire). Ainsi, s'il est constaté que la variation des composantes élémentaires des efforts n'est pas une fonction linéaire du carré de la fréquence du cycle, alors il est déduit que l'objet est au moins en partie non-rigide. Cette détermination peut être intéressante dans les cas où il n'est pas certain que l'objet soit non rigide. Par exemple, un objet peut comporter certaines parties non rigides telles que des suspensions, des câbles ou des réservoirs de liquide. Si ces parties ont une masse très faible par rapport à la masse totale de l'objet, leur impact sur les efforts globaux appliqués à l'objet peut être négligeable. Dans ce cas, les composantes élémentaires des efforts globaux ont un comportement très proche d'une loi linéaire en fonction du carré de la fréquence de cycle. Néanmoins, des capteurs spécifiques placés sur les parties non rigides peuvent identifier un comportement résonnant.

Selon un mode de réalisation, la détermination du comportement dynamique de l'objet 10 comprend la détermination des fréquences de résonance et optionnellement les modes de résonances de l'objet 10 parmi les fréquences de la plage de fréquences du mouvement périodique auquel l'objet a été soumis. Ces déterminations peuvent se faire que la détermination que l'objet est au moins en partie non-rigide ait été préalablement faite ou pas.

La figure 5 montre un exemple de composantes élémentaires obtenues en fonction de la fréquence de cycle. Dans cet exemple, le mouvement périodique est celui illustré à la figure 3, c'est-à-dire est une combinaison de deux mouvements élémentaires : un mouvement de roulis r défini par r = a.sin(2.u), et un mouvement de tangage t défini par t = a.sin (3.u), où u= 2.π.f.t, f est la fréquence de cycle, a l'amplitude angulaire et t le temps. La période du mouvement périodique est T=1/f. L'amplitude angulaire est, par exemple, de a=100 mrd. Les composantes élémentaires obtenues sont donc pour cet exemple composante élémentaire intensité roulis (Ir), composante élémentaire phase roulis (Rr), composante élémentaire intensité tangage (It), composante élémentaire phase tangage (Rt). La figure 5 montre l'évolution des composantes élémentaires Rr, Ir, Rt, It en fonction de la fréquence de cycle, et la figure 6 montre l'évolution des mêmes composantes élémentaires mais en fonction de le fréquence élémentaire correspondant à chaque composante élémentaire.

L'obtention de la variation des composantes élémentaires en fonction de la fréquence élémentaire va permettre d'identifier une ou plusieurs fréquences de résonances de l'objet 10. Ainsi à l'étape 56, au moins une fréquence de résonance est identifiée pour chaque mouvement élémentaire à partir des variations suivant les fréquences élémentaires des composantes élémentaires de chaque mouvement élémentaire. Pour ce, on identifie, selon un mode de réalisation, pour chaque mouvement élémentaire, un extremum de la composante élémentaire intensité. Dans l'exemple de la figure 6, il y a deux extremums pour le roulis et deux extremums pour le tangage (pour chacun à la fréquence élémentaire 0,6Hz et 1,5Hz). Ces extremums permettent de définir les fréquences de résonance. En effet, lorsqu'un paramètre est sensible à un mode de résonance d'un objet ou d'une partie de cet objet, l'amplitude de variation de ce paramètre varie en fonction de la fréquence du mouvement périodique qui lui est appliqué, et présente un maximum à la fréquence de résonance.

Par contraste, pour un objet rigide, les variations des composantes élémentaires en fonction de la fréquence (de cycle ou élémentaires) ne dépendent que du poids et des efforts d'inertie. Le poids est indépendant de la fréquence de cycle et les efforts d'inertie sont proportionnels au carré de la fréquence de cycle. De ce fait, les composantes élémentaires ne présentent aucun extrémum en fonction de cette fréquence pour un objet rigide. L'apparition d'un extrémum d'une composante élémentaire en fonction de la fréquence traduit donc essentiellement l'existence d'un mode de résonance d'au moins une partie de l'objet. Dans certaines configurations, il est possible d'isoler cette partie de l'objet. Par exemple, dans le cas d'un réservoir, il est possible de mesurer les composantes élémentaires avec le réservoir vide ou totalement rempli de sorte qu'il n'y ait pas de mouvement de liquide (mesurées en appliquant le même mouvement périodique aux mêmes fréquences mais sur le réservoir vide). Dans ce cas, il est avantageux de soustraire les composantes élémentaires mesurées avec le réservoir vide, par exemple, à celles mesurées avec le réservoir partiellement rempli. Cette méthode permet d'isoler les composantes élémentaires liées au seul liquide en mouvement et ainsi d'identifier plus clairement ses modes de résonance.

Selon un mode de réalisation, ces extremums sont définis comme représentatifs d'une fréquence de résonance si la composante élémentaire phase correspondante a une variation rapide. En effet, une autre caractéristique d'un mode de résonance est que la phase de la réponse du capteur C par rapport à la sollicitation varie plus rapidement au voisinage de la fréquence de résonance que vers les autres fréquences. Par rapide on entend en la comparant au reste de la variation. Par exemple, pour l'exemple de la figure 6, on remarque qu'aux fréquences élémentaires de 0,6Hz et 1,5Hz (correspondant aux extremums de composante élémentaire intensité), la composante élémentaire phase roulis a une rapide décroissance. De ce fait, les fréquences de 0,6Hz et 1,5Hz sont des fréquences de résonance pour les mouvements de roulis et tangage. De même, on remarque qu'à la fréquence élémentaire de 0,6Hz, la composante élémentaire phase tangage a une rapide croissance, et à la fréquence élémentaire de 1,5 Hz, la composante élémentaire phase tangage a une rapide décroissance.

Ainsi, selon un mode de réalisation, le procédé comprend de plus l'identification d'un mode de résonance de la grandeur de résonance. Un mode de résonance est associé à chacune des fréquences de résonance identifiées pour chaque mouvement élémentaire. Il peut donc y avoir plusieurs modes s'il y a plusieurs fréquences identifiées. Chaque mode de résonance est caractérisé par la fréquence de résonance identifiée, une amplitude de la composante élémentaire intensité à la fréquence de résonance identifiée, et une direction associée au mouvement élémentaire pour lequel la fréquence de résonance a été identifiée.

Selon un mode de réalisation, si une des fréquences de résonance identifiées pour chacun des mouvements élémentaires est identique pour plusieurs mouvements élémentaires, alors le mode de résonance est caractérisé par la combinaison de ces mouvements élémentaires (par exemple roulis et tangage).

## Revendications

1. Procédé d'identification du comportement dynamique d'un **objet non-rigide (10),** l'objet étant fixé solidairement à une **plateforme (12)** pouvant être mise en mouvement par un **dispositif d'entrainement (14),** le procédé comprenant :
a. Actionner le dispositif d'entrainement (14) de manière à imprimer à l'objet un **mouvement périodique** prédéfini à une fréquence, dite *« fréquence de cycle* », le mouvement périodique étant une combinaison **d'au moins deux mouvements élémentaires** périodiques géométriquement indépendants, lesdits au moins deux mouvements élémentaires ayant chacun une fréquence, dite *« fréquence élémentaire »,* multiple entier de la fréquence de cycle, au plus deux desdits au moins deux mouvements élémentaires étant de même fréquence élémentaire, si le mouvement périodique comprend deux mouvements élémentaires de même fréquence élémentaire alors ils sont de phase différente, préférentiellement en quadrature de phase, l'actionnement étant fait pendant au moins une période du mouvement périodique;
b. Enregistrer pendant l'actionnement la variation d'au moins une grandeur représentative d'un comportement dynamique, dite *« **grandeur dynamique** »,* collectée par au moins un **capteur (C)** disposé sur la plateforme et/ou l'objet;
c. Répéter l'actionnement du dispositif d'entrainement et l'enregistrement de la variation de ladite au moins une grandeur dynamique à diverses fréquences de cycle à chaque fois pendant au moins une période du mouvement périodique, les diverses fréquences de cycle se trouvant dans une plage de fréquences prédéfinies ;
d. Calculer, par une unité de calcul, pour chacune des fréquences de cycle de la plage de fréquences prédéfinies les composantes d'une transformée de Fourier de la variation de ladite au moins une grandeur dynamique pour chaque fréquence élémentaire, les composantes, dites *« **composantes élémentaires** »,* incluant une **composante élémentaire intensité** et une **composante élémentaire phase** ; et
e. Déterminer en fonction de la variation des composantes élémentaires un comportement dynamique de l'objet.

2. Procédé selon la revendication précédente, dans lequel lesdits au moins deux mouvements élémentaires ont deux fréquences élémentaires différentes, préférentiellement de rapports 2 et 3 ou 3 et 4 par rapport à la fréquence de cycle, ou lesdits au moins deux mouvements élémentaires ont trois fréquences élémentaires différentes, préférentiellement de rapports 4, 5 et 6 par rapport à la fréquence de cycle.

3. Procédé selon la revendication 1 ou 2, dans lequel déterminer le comportement dynamique de l'objet comprend constater que la variation des composantes élémentaires n'est pas une fonction linéaire du carré de la fréquence du cycle.

4. Procédé selon l'une des revendications précédentes, dans lequel ladite au moins une grandeur représentative d'un comportement dynamique est représentative d'une condition de résonance de l'objet, et cette grandeur est dite *« **grandeur de résonance** »,* et déterminer le comportement dynamique de l'objet comprend identifier au moins une **fréquence de résonance** pour chacun desdits au moins deux mouvements élémentaires à partir des variations suivant les fréquences élémentaires des composantes élémentaires de chacun desdits au moins deux mouvements élémentaires.

5. Procédé selon la revendication précédente, dans lequel identifier au moins une fréquence de résonance pour chacun desdits au moins deux mouvements élémentaires, inclut identifier un extremum de la composante élémentaire intensité pour chacun desdits au moins deux mouvements élémentaires.

6. Procédé selon l'une quelconque des revendications 4 ou 5, comprenant de plus la détermination d'une amplitude de ladite au moins une grandeur de résonance pour ladite au moins une fréquence de résonance, cette détermination se faisant à partir des variations de ladite au moins une grandeur de résonance suivant les fréquences élémentaires des composantes élémentaires pour chacun desdits au moins deux mouvements élémentaires.

7. Procédé selon la revendication 6, dans lequel l'amplitude de ladite au moins une grandeur de résonance est l'amplitude de l'extremum de la composante élémentaire intensité de ladite au moins une grandeur de résonance à ladite au moins une fréquence de résonance identifiée.

8. Procédé selon l'une des revendications 4 à 7, comprenant de plus l'identification pour chacune desdites fréquences de résonance identifiées d'un mode de résonance de ladite au moins une grandeur de résonance, le mode de résonance étant de plus **caractérisé par** une amplitude de la composante élémentaire intensité à ladite fréquence de résonance considérée, et une direction associée au mouvement élémentaire pour ladite fréquence de résonance considérée.

9. Procédé selon la revendication précédente, dans lequel si une desdites fréquences de résonance identifiées pour chacun desdits au moins deux mouvements élémentaires est identique pour plusieurs mouvements élémentaires, alors le mode de résonance est **caractérisé par** la combinaison de ces mouvements élémentaires.

10. Procédé selon l'une quelconque des revendications précédentes, dans lequel l'objet est un réservoir contenant un liquide, et la détermination du comportement dynamique comprend une étape de mesure des grandeurs dynamiques avec le réservoir vide, et de déduction, par soustraction des composantes élémentaires, les seuls effets du liquide.

11. Procédé selon l'une quelconque des revendications précédentes, dans lequel ledit au moins un capteur comprend une pluralité de capteurs d'efforts et/ou accéléromètres disposés sur des parties de l'objet susceptibles de résonance et/ou capteurs de pression disposés sur des parties rigides de l'objet et/ou jauges de contraintes disposées sur des parties souples de l'objet.

12. Procédé selon l'une quelconque des revendications précédentes, dans lequel ladite au moins une grandeur de résonance collectée par ledit au moins un capteur est enregistrée à une cadence supérieure à au moins 4 fois une plus haute des fréquences élémentaires et de préférence supérieure à 10 fois.

13. Procédé selon l'une quelconque des revendications précédentes, dans lequel la répétition de l'actionnement se fait par fréquences de cycle croissantes dans la plage de fréquences prédéfinies.
